# EUROPÄISCHE PATENTSCHRIFT

(11) **EP 2 386 364 B1**
(45) Veröffentlichungstag und Bekanntmachung des Hinweises auf die Patenterteilung: **25.01.2017**
(21) Anmeldenummer: 11003387.5
(22) Anmeldetag: 21.04.2011
(51) Int. Cl.: A46B 11/06, A46B 13/00, F24J 2/46, H02S 40/10, B08B 1/04, B08B 3/02, B08B 3/04, A46B 13/06

(54) **Reinigunsvorrichtung für Solaranlagenflächen**
Cleaning device for solar panels
Dispositif de nettoyage pour panneaux solaire

(30) Priorität: 23.04.2010 DE 102010018011
(43) Veröffentlichungstag der Anmeldung: 16.11.2011
(60) Teilanmeldung: 16175448.6
(73) Patentinhaber: Jäger, Anton, 89250 Senden (DE)
(72) Erfinder: Jäger, Anton, 89250 Senden (DE)
(74) Vertreter: Manitz, Finsterwald & Partner GbR

(56) Entgegenhaltungen:
- EP-A1- 0 870 461
- WO-A1-93/24717
- DE-A1- 3 417 913
- DE-C1- 19 653 697
- DE-U1-202009 008 001
- US-B1- 6 862 769

## Beschreibung

Die Erfindung betrifft eine Reinigungsvorrichtung zum Reinigen von Solar- oder Photovoltaikanlageflächen, mit einem Träger, wenigstens einer an dem Träger drehbar gelagerten Reinigungswalze, und einem Drehantrieb für die Reinigungswalze.

Derartige Reinigungsvorrichtungen sind grundsätzlich bekannt, wobei ein elektrischer Antrieb vorgesehen ist, um die Reinigungswalze in Rotation zu versetzen. Kosten und Eigengewicht einer derartigen Vorrichtung sind allerdings relativ hoch, weshalb sie im Grunde weder für Privathaushalte noch zum Reinigen von in der Praxis regelmäßig geneigten Solar- bzw. Photovoltaikanlagenflächen auf Gebäudedächern besonders geeignet ist.

Die DE 3417913 A1 zeigt den Oberbegriff des Anspruchs 1 und beschreibt ein Reinigungs- bzw. Poliergerät mit einem Haltegriff, an dem an einer Gabel eine Welle drehbar gelagert ist. Die Welle trägt hierbei Bürsten und ist über Rotoren in Rotation versetzbar. Die Rotoren werden dabei mit einem Medium, z. B. Wasser, beaufschlagt.

Die DE 20 2009 008 001 U1 beschreibt eine Vorrichtung zum Reinigen von Flächen einer Konstruktion. An einem Rahmen sind mindestens zwei Reinigungselemente angebracht. Bei den Reinigungselementen kann es sich beispielsweise um Tellerbürsten handeln. Ein Wassermotor oder ein Schaufelrad wird zum Antrieb zumindest eines Reinigungselements verwendet. Die Flüssigkeit, die zum hydraulischen Antrieb verwendet wird, kann auch zum Reinigen verwendet werden.

Die DE 20 2004 016 272 U1 offenbart eine Reinigungsvorrichtung für den menschlichen Körper mit einem Träger, einer Reinigungswalze und einem als Fluidantrieb ausgebildeten Drehantrieb für die Reinigungswalze.

Die US 4,597,127 B offenbart eine Reinigungsvorrichtung für Fahrzeuge und dergleichen mit einem Träger, einer Reinigungswalze und einem als Fluidantrieb ausgebildeten Drehantrieb für die Reinigungswalze, wobei das Reinigungsfluid aus dem Drehantrieb in radialer Richtung auf die zu reinigende Oberfläche austritt.

Die CH 459 143 B offenbart eine Tellerwaschbürste zum Reinigen von Fahrzeugen mit einem als Fluidantrieb ausgeführten Drehantrieb, der über eine Getriebeeinrichtung einen Bürstenkopf antreibt.

Aufgabe der Erfindung ist es, eine Reinigungsvorrichtung der eingangs genannten Art zu schaffen, die bei zuverlässiger Funktionsweise kostengünstig herstellbar ist und ein möglichst geringes Eigengewicht aufweist.

Die Lösung dieser Aufgabe erfolgt durch die Merkmale des Anspruchs 1.

Erfindungsgemäß ist der Drehantrieb der Reinigungsvorrichtung als ein Fluidantrieb ausgebildet, bei dem die Strömung eines der Reinigungswalze zu Reinigungszwecken zugeführten Reinigungsfluids in eine Antriebsbewegung für die Reinigungswalze umgesetzt wird. Der Drehantrieb ist dazu ausgebildet, die Reinigungswalze an zumindest einer Stirnseite, bevorzugt an beiden Stirnseiten, zu halten.

Durch die Erfindung kann auf einen wie auch immer gearteten zusätzlichen Antrieb für die Reinigungswalze, insbesondere auf einen Elektromotor, verzichtet werden. Die erfindungsgemäße Reinigungsvorrichtung kann hierdurch kostengünstig und mit geringem Eigengewicht hergestellt werden.

Gemäß einem bevorzugten Ausführungsbeispiel ist der Drehantrieb nach dem Prinzip eines Fluidantriebs für eine Tellerwaschbürste ausgebildet. Tellerwaschbürsten mit Fluidantrieb sind grundsätzlich bekannt. Die z.B. mit einer Beborstung versehene wirksame Fläche einer solchen Tellerwaschbürste wird von der Flachseite einer rotierenden Scheibe gebildet, die mittels des Fluids in Rotation versetzt werden kann. Eine Reinigungswalze ist nun gerade nicht stirnseitig, sondern auf ihrer Umfangsseite mit einer Beborstung oder einer anderen zum Reinigen geeigneten Ausstattung versehen. Es wurde jedoch von dem Erfinder erkannt, dass das von einer Tellerwaschbürste bekannte Prinzip eines Fluidantriebs auch für den Drehantrieb einer Reinigungswalze genutzt werden kann, wenn die Reinigungswalze stirnseitig mit dem Drehantrieb der Tellerwaschbürste gekoppelt wird. Es wird also die drehangetriebene Reinigungsscheibe einer Tellerwaschbürste durch eine Reinigungswalze ersetzt, während gleichzeitig die "stirnseitige" Beborstung der Arbeitsscheibe durch die umfangsseitige Beborstung der Reinigungswalze ersetzt wird.

Gemäß einer weiteren bevorzugten Ausgestaltung der Erfindung ist der Drehantrieb ein Bestandteil des Trägers. Hierdurch kann der Drehantrieb gleichzeitig zum Halten der Reinigungswalze verwendet werden.

Insbesondere kann der Träger als Gabel mit vom Drehantrieb gebildeten Zinken zum Halten der Reinigungswalze ausgebildet sein, wobei bevorzugt der Drehantrieb zwei Antriebseinheiten umfasst, die jeweils eine Zinke bilden.

Des Weiteren ist bevorzugt vorgesehen, dass der Drehantrieb gleichzeitig im Bereich beider Stirnseiten der Reinigungswalze wirksam ist.

In einer weiteren Ausgestaltung der Erfindung kann vorgesehen sein, dass der Drehantrieb zwei mit unterschiedlichem Drehsinn versehene und ansonsten baugleich ausgeführte Antriebseinheiten umfasst.

Die Erfindung ermöglicht es also in einem bevorzugten Ausführungsbeispiel, die Reinigungswalze gleichzeitig an beiden Stirnseiten mittels herkömmlicher Fluidantriebe in Rotation zu versetzen, wobei diese Antriebseinheiten gleichzeitig zum Halten und zur Drehlagerung der Reinigungswalze dienen. Eine erfindungsgemäße Reinigungsvorrichtung kann hierdurch äußerst kostengünstig und mit relativ geringem Eigengewicht realisiert werden, ohne Einbußen an Zuverlässigkeit und Funktionsfähigkeit hinnehmen zu müssen. Bekannte Fluidantriebe sind ohne weiteres in der Lage, selbst im Niederdruckbereich von beispielsweise bis zu etwa 5 bar eine ausreichend hohe Antriebskraft zur Verfügung zu stellen. Hohe Drehzahlen von mehreren 1.000 Umdrehungen pro Minute lassen sich mit bekannten Fluidantrieben realisieren. Mittels des nachgeordneten Getriebes kann hieraus eine für die erfindungsgemäße Reinigungswalze geeignete Drehzahl abgeleitet werden. In bekannten Tellerwaschbürsten werden derartige Getriebe eingesetzt.

Da bei Verwendung bekannter Fluidantriebe für Tellerwaschbürsten an den beiden Stirnseiten der Reinigungswalze diese Fluidantriebe mit einander zugewandten wirksamen Seiten anzuordnen sind, ist es erforderlich, dass die beiden Antriebseinheiten einen unterschiedlichen Drehsinn aufweisen. Der Drehsinn derartiger Fluidantriebe kann durch einen mit nur geringem Aufwand verbundenen Umbau realisiert werden, so dass sich die Herstellungskosten nicht wesentlich erhöhen, wenn die zu verwendenden Fluidantriebe nicht ohnehin von vornherein in beiden Drehsinn-Varianten erhältlich sind.

Bei entsprechend stabiler Ausgestaltung des Trägers und gegebenenfalls des einen Bestandteil des Trägers bildenden Drehantriebs z.B. in Form zweier nach Art von Zinken einer Gabel stirnseitig mit der Reinigungswalze gekoppelter Antriebseinheiten kann es genügen, wenn die Reinigungswalze ausschließlich durch den Drehantrieb gehalten wird. Alternativ oder zusätzlich können Querverbindungen vorgesehen sein, die insbesondere die Reinigungswalze durchsetzen. Beispielsweise werden durch derartige Querverbindungen die "Zinken" der Halte- oder Trägergabel im Bereich der freien Enden oder in zwischen den freien Enden und der an der Basis der Zinken vorhandenen Querhalterung miteinander verbunden, um auf diese Weise dem Träger eine jeweils gewünschte Stabilität bzw. Festigkeit zu verleihen.

Wenn mehr als eine Antriebseinheit für den Drehantrieb der Reinigungswalze vorgesehen ist, dann kann gemäß einer Weiterbildung der Erfindung vorgesehen sein, dass der Träger eine bevorzugt im Wesentlichen parallel zur Drehachse der Reinigungswalze verlaufende Halterung für die Antriebseinheit umfasst, die als gemeinsame Fluidzufuhr für die Antriebseinheit ausgebildet ist.

Der Träger kann somit einen Bestandteil der Fluidzufuhr bilden, und umgekehrt.

Gemäß der Erfindung ist der Drehantrieb, insbesondere jede Antriebseinheit, dazu ausgebildet, das Reinigungsfluid dem Inneren der Reinigungswalze stirnseitig zuzuführen. Zusatzmaßnahmen zum Zuführen des Reinigungsfluids in das Innere der Walze sind folglich hierbei nicht erforderlich. Das Austreten des Reinigungsfluids durch im Walzenmantel ausgebildete Austrittsöffnungen kann daher auf vergleichsweise kostengünstige und einfache Weise realisiert werden.

Insbesondere kann vorgesehen sein, dass der Drehantrieb, insbesondere jede Antriebseinheit, einen Arbeitsraum umfasst, dem das Fluid zugeführt und in dem die Fluidströmung in die Antriebsbewegung umgesetzt wird, wobei der Arbeitsraum mit dem Inneren der Reinigungswalze kommuniziert. Hierbei ist folglich vorgesehen, dass zunächst dem Reinigungsfluid kinetische Energie für den Drehantrieb der Reinigungswalze entzogen wird, woraufhin das Reinigungsfluid über den Arbeitsraum, in welchem dieser Energieübertrag erfolgt, in geeigneter Weise dem Inneren der Reinigungswalze zugeführt wird, um anschließend in der jeweils durch die Ausgestaltung der Reinigungswalze vorgegebenen Weise nach außen abgegeben zu werden.

Weitere Ausgestaltungen der Erfindung sind auch in den abhängigen Ansprüchen, der Beschreibung sowie der Zeichnungen angegeben.

Die Erfindung wird im Folgenden beispielhaft unter Bezugnahme auf die Zeichnung beschrieben. Es zeigen:
- Fig. 1: schematisch eine Ausführungsform einer erfindungsgemäßen Reinigungsvorrichtung,
- Fig. 2: schematisch den grundsätzlichen Aufbau einer Fluidantriebseinheit, wie sie für eine erfindungsgemäße Reinigungsvorrichtung verwendbar ist, und
- Fig. 3: eine Fluidantriebseinheit entsprechend derjenigen von Fig. 2 mit entgegengesetztem Drehsinn.

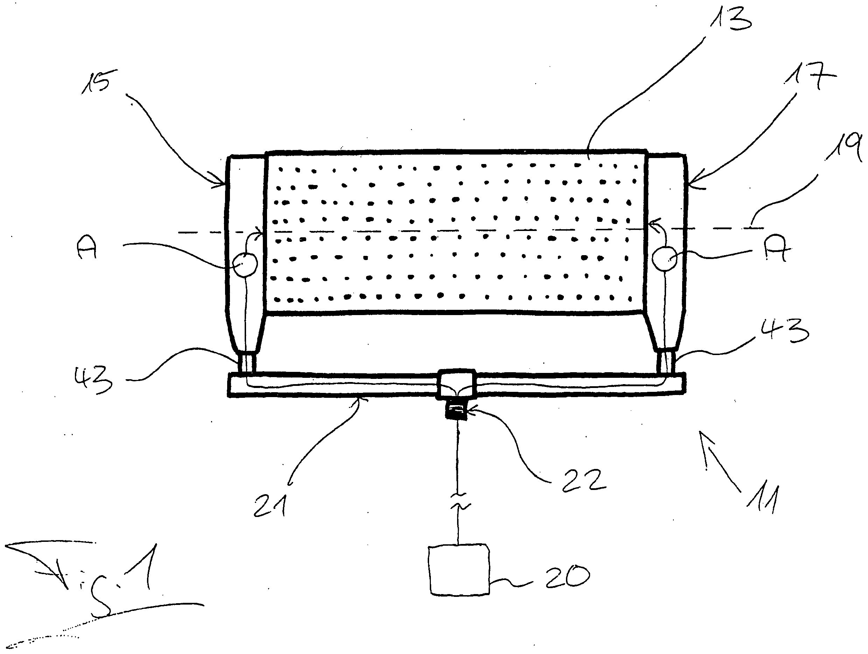

Die in Fig. 1 dargestellte erfindungsgemäße Reinigungsvorrichtung umfasst eine zylindrische Reinigungswalze, die an ihrer Umfangsfläche mit einer auf den jeweiligen Reinigungszweck zugeschnittenen Ausstattung versehen ist, beispielsweise mit einer Beborstung. Zusätzlich sind im z.B. die Beborstung tragenden Walzenmantel Austrittsöffnungen für ein Reinigungsfluid, insbesondere Wasser, vorgesehen.

Halterung und Drehantrieb der Reinigungswalze 13 erfolgen in diesem Ausführungsbeispiel durch zwei Antriebseinheiten 15, 17, auf die nachstehend näher eingegangen wird. Diese Antriebseinheiten 15, 17 dienen gleichzeitig als Fluidzufuhr und sind hierzu über Anschlüsse 43 an eine gemeinsame Halterung 21 angeschlossen, die sich parallel zur Drehachse 19 der Reinigungswalze 13 erstreckt. Zusammen mit der Halterung 21 bilden die beiden Antriebseinheiten 15, 17 einen Träger 11 für die Reinigungswalze 13.

Die Halterung 21 ist über einen Anschluss 22 insbesondere an einen handelsüblichen Hochdruckreiniger 20 anschließbar, so dass die erfindungsgemäße Reinigungsvorrichtung auch für Privathaushalte interessant ist.

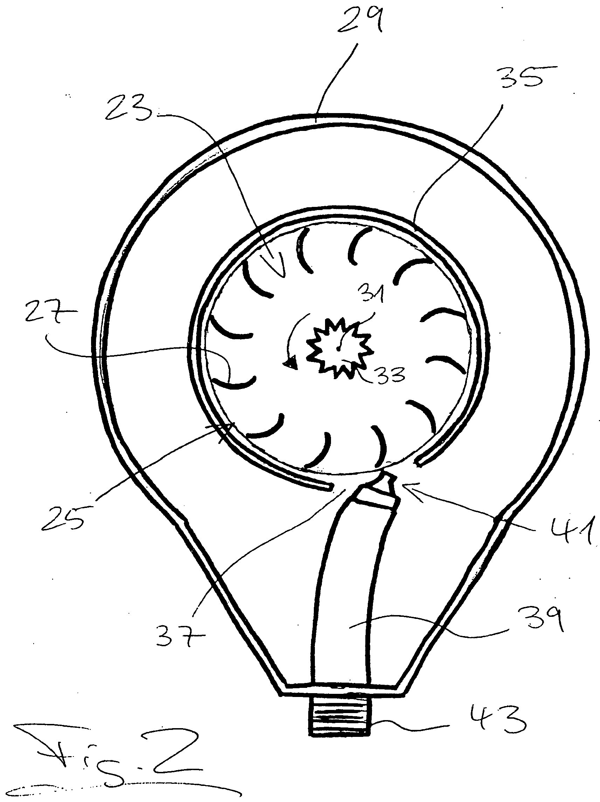

Der Strömungsweg des Reinigungsfluids durch die Halterung 21 und die Antriebseinheiten 15, 17 in das Innere der Reinigungswalze 13 hinein ist durch die Pfeile in Fig. 1 angedeutet. Mit "A" ist in den Antriebseinheiten 15, 17 jeweils angedeutet, dass das Reinigungsfluid dort insofern Arbeit verrichtet, als ihm in einer nachstehend in Verbindung mit Fig. 2 erläuterten Turbine kinetische Energie entzogen wird, um hierdurch einen Drehantrieb der Reinigungswalze 13 zu realisieren.

Insofern erfüllen die Antriebseinheiten 15, 17 jeweils eine Dreifachfunktion, indem sie die Reinigungswalze 13 halten und drehbar lagern, für die Zufuhr des Fluids in das Innere der Reinigungswalze 13 sorgen und außerdem den Drehantrieb für die Reinigungswalze 13 realisieren.

Wie im Einleitungsteil erwähnt, können Halterung und Drehlagerung der Reinigungswalze 13 ausschließlich durch die gewissermaßen die "Zinken" eines insgesamt gabelartigen Trägers 11 bildenden Antriebseinheiten 15, 17 besorgt werden. Die Halterungs- und/oder Lagerungsfunktion für die Reinigungswalze 13 kann aber zumindest zum Teil auch auf andere Art und Weise realisiert werden, beispielsweise mittels die Reinigungswalze 13 durchsetzender Querverstrebungen, die für die nötige oder für zusätzliche Stabilität bzw. Festigkeit sorgen. Bei entsprechend stabiler Ausgestaltung des Querträgers 21 ist es aber möglich, die Reinigungswalze 13 ausschließlich mittels der beiden stirnseitig angreifenden Antriebseinheiten 15, 17 zu halten und bezüglich der Rotation um die Drehachse 19 zu lagern.

Der Durchmesser der Reinigungswalze 13 liegt beispielsweise bei etwa 200 mm, was sich insbesondere für die Reinigung von Solar- oder Photovoltaikanlageflächen als besonders geeignet herausgestellt hat. Mit dem geschilderten Aufbau der Reinigungsvorrichtung können problemlos unterschiedliche Arbeitsbreiten, d.h. Abmessungen der Reinigungswalze 13 entlang ihrer Längsachse 19, realisiert werden, die beispielsweise zwischen etwa 500 mm und 1.000 mm liegen. Hierdurch kann in vorteilhafter Weise eine Anpassung der Reinigungsvorrichtung an die üblichen Feldgrößen von Solar- bzw. Photovoltaikanlagen erfolgen. Des Weiteren kann beispielsweise bei ausreichender Länge der Halterung 21 eine in Längsrichtung der Halterung 21 vorgesehene Verstellbarkeit der beiden stirnseitig eingreifenden Antriebseinheiten 15, 17 vorgesehen sein, die dazu dient, mit ein und derselben Vorrichtung unterschiedlich lange Reinigungswalzen 13 aufnehmen zu können.

Den prinzipiellen Aufbau einer grundsätzlich bekannten Tellerwaschbürste zeigt Fig. 2.

In einem an einer Seite offenen Gehäuseteil 29 ist eine Antriebsscheibe 25 um eine Drehachse 31 drehbar gelagert. Die Antriebsscheibe 25 befindet sich in einem Arbeitsraum 23, der in axialer Richtung durch das Gehäuseteil 29 und in radialer Richtung durch eine umlaufende Wand 35 begrenzt ist, in der ein Durchbruch 37 ausgebildet ist.

Auf der Antriebsscheibe 25 sind Schaufeln 27 ausgebildet, die mittels des Reinigungsfluids beaufschlagt werden, das von einem Leitungsabschnitt 39, der an seinem freien Ende eine Düse 41 trägt, zugeführt wird. Über einen Anschluss 43 ist der Leitungsabschnitt 39 und damit die Antriebseinheit an eine Fluidquelle anschließbar, insbesondere in der in Fig. 1 dargestellten Weise im Rahmen einer erfindungsgemäßen Reinigungsvorrichtung.

Die Antriebsscheibe 25 ist in dem dargestellten Ausführungsbeispiel drehfest mit einem Zahnrad 33 versehen, das eingangsseitig einer nicht dargestellten Getriebeanordnung vorgesehen ist. Ausgangsseitig ist diese Getriebeanordnung mit der Tellerbürste bzw. einem Träger der Tellerbürste verbunden, worauf hier im Einzelnen nicht näher eingegangen zu werden braucht, da derartige Tellerbürsten grundsätzlich bekannt sind. Durch die Getriebeanordnung kann eine ein- oder mehrfache Untersetzung der Eingangsdrehzahl der Antriebsscheibe 25 erfolgen, die mehrere 1.000 Umdrehungen pro Minute betragen kann.

Erfindungsgemäß wird nun mittels des Zahnrads 33 und der angeschlossenen Getriebeanordnung nicht mehr die Tellerwaschbürste bzw. deren Träger in Rotation versetzt, sondern es wird an den Ausgang der Getriebeanordnung die Reinigungswalze 13 (vgl. Fig. 1) stirnseitig gekoppelt. Die Anbindung der Reinigungswalze 13 an die beiden Antriebseinheiten 15, 17 erfolgt jeweils derart, dass das Reinigungsfluid aus dem Antriebsraum 23 zumindest zum überwiegenden Teil nur in das Innere der Reinigungswalze 13 gelangen kann, um aus den im Walzenmantel vorgesehenen Austrittsöffnungen in vorbestimmter Weise austreten zu können.

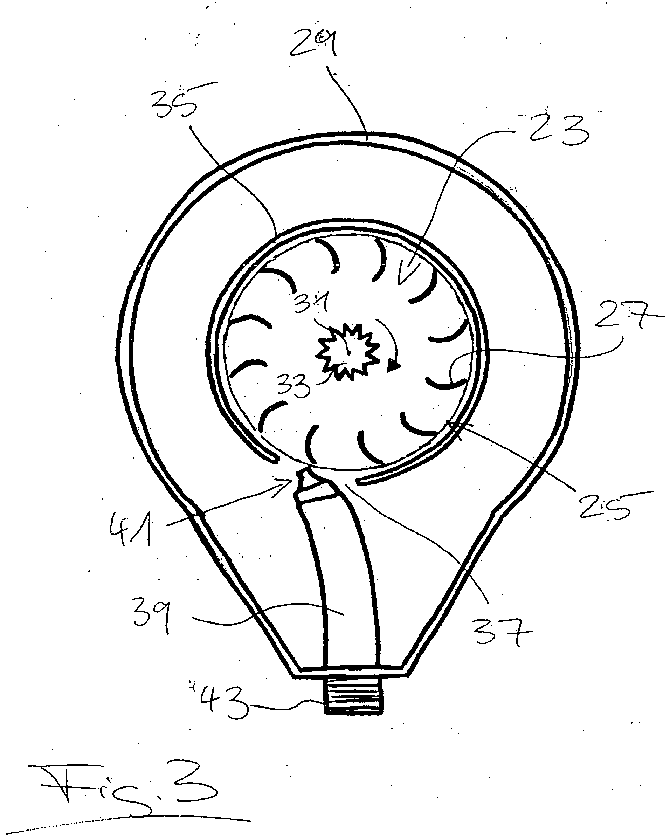

Wie insbesondere aus einem Vergleich der Fig. 2 und 3 ersichtlich ist, kann ein Fluidantrieb mit entgegengesetztem Drehsinn, wie er für die jeweils andere Stirnseite der Reinigungswalze 13 benötigt wird, einfach dadurch realisiert werden, dass der Durchbruch 37 und die Orientierung sowohl des mit der Düse 41 versehenen Leitungsabschnitts 39 als auch der Schaufeln 27 so geändert wird, dass sich eine Rotation der Antriebsscheibe 25 im Uhrzeigersinn (Fig. 3) ergibt. Mit anderen Worten ist bezüglich des Drehsinns die Antriebseinheit der Fig. 3 wie das Spiegelbild der in Fig. 2 dargestellten Antriebseinheit ausgebildet. Eine solche Modifizierung kann auf einfache und kostengünstige Weise realisiert werden.

Da erfindungsgemäß die ohnehin bereits existierenden Antriebseinheiten außerdem eine Mehrzahl von Funktionen erfüllen, können in vorteilhafter Weise Kosten und Gewicht der Reinigungsvorrichtung überraschend gering gehalten werden. So kann gewissermaßen "mit einfachsten Mitteln" unter Verwendung bekannter Komponenten eine preiswerte und leichte Reinigungsvorrichtung realisiert werden, die aufgrund des geringen Eigengewichts für die Reinigung von an geneigten Dächern vorgesehenen Solar- bzw. Photovoltaikanlagenflächen geeignet und aufgrund der relativ geringen Herstellungskosten besonders für Privathaushalte interessant ist.

### Bezugszeichenliste

- 11: Träger
- 13: Reinigungswalze
- 15, 17: Antriebseinheit
- 19: Drehachse
- 20: Hochdruckreiniger
- 21: Halterung, Querträger
- 22: Anschluss
- 23: Arbeitsraum
- 25: Antriebsscheibe
- 27: Schaufel
- 29: Gehäuseteil
- 31: Drehachse
- 33: Zahnrad
- 35: Wand
- 37: Durchbruch
- 39: Leitungsabschnitt
- 41: Düse
- 43: Anschluss

## Patentansprüche

1. Reinigungsvorrichtung zum Reinigen von Solar- oder Photovoltaikanlagenflächen mit
einem Träger (11),
wenigstens einer an dem Träger (11) drehbar gelagerten Reinigungswalze (13), und
einem Drehantrieb (15, 17) für die Reinigungswalze (13),
wobei der Drehantrieb (15, 17) als Fluidantrieb ausgebildet ist, bei dem die Strömung eines der Reinigungswalze (13) zu Reinigungszwecken zugeführten Reinigungsfluids in eine Antriebsbewegung für die Reinigungswalze (13) umgesetzt wird,
wobei der Drehantrieb (15, 17) dazu ausgebildet ist, die Reinigungswalze (13) an zumindest einer Stirnseite zu halten und das Reinigungsfluid dem Inneren der Reinigungswalze (13) stirnseitig zuzuführen, **dadurch gekennzeichnet, dass** eine nachgeordnete Getriebeanordnung vorgesehen ist, an deren Ausgang die Reinigungswalze (13) stirnseitig gekoppelt ist.

2. Reinigungsvorrichtung nach Anspruch 1,
dadurch **gekenntzeichnet,**
dass der Drehantrieb (15, 17) nach dem Prinzip eines Fluidantriebs für eine Tellerwaschbürste ausgebildet ist.

3. Reinigungsvorrichtung nach Anspruch 1 oder 2,
**dadurch gekennzeichnet,**
**dass** der Drehantrieb (15, 17) ein Bestandteil des Trägers (11) ist.

4. Reinigungsvorrichtung nach einem der vorhergehenden Ansprüche,
**dadurch gekennzeichnet,**
**dass** der Träger (11) als Gabel mit vom Drehantrieb (15, 17) gebildeten Zinken zum Halten der Reinigungswalze (13) ausgebildet ist, wobei bevorzugt der Drehantrieb zwei Antriebseinheiten (15, 17) umfasst, die jeweils eine Zinke bilden.

5. Reinigungsvorrichtung nach einem der vorhergehenden Ansprüche,
**dadurch gekennzeichnet,**
**dass** der Drehantrieb (15, 17) gleichzeitig im Bereich beider Stirnseiten der Reinigungswalze (13) wirksam ist.

6. Reinigungsvorrichtung nach einem der vorhergehenden Ansprüche,
**dadurch gekennzeichnet,**
**dass** der Drehantrieb zwei mit unterschiedlichem Drehsinn versehene und ansonsten baugleich ausgeführte Antriebseinheiten (15, 17) umfasst.

7. Reinigungsvorrichtung nach einem der vorhergehenden Ansprüche,
**dadurch gekennzeichnet,**
**dass** der Träger (11) eine bevorzugt im Wesentlichen parallel zur Drehachse (19) der Reinigungswalze (13) verlaufende Halterung (21) für Antriebseinheiten (15, 17) des Drehantriebs umfasst, die als gemeinsame Fluidzufuhr für die Antriebseinheiten (15, 17) ausgebildet ist.

8. Reinigungsvorrichtung nach einem der vorhergehenden Ansprüche,
**dadurch gekennzeichnet,**
**dass** der Drehantrieb (15, 17), insbesondere jede Antriebseinheit, einen Arbeitsraum (23) umfasst, dem das Fluid zugeführt und in dem die Fluidströmung in die Antriebsbewegung umgesetzt wird, wobei der Arbeitsraum (23) mit dem Inneren der Reinigungswalze (13) kommuniziert.

9. Reinigungsvorrichtung nach einem der vorhergehenden Ansprüche,
**dadurch gekennzeichnet,**
**dass** der Drehantrieb (15, 17) dazu ausgebildet ist, die Reinigungswalze (13) an beiden Stirnseiten zu halten.

## Claims

1. A cleaning apparatus for cleaning solar installation surfaces or photovoltaic installation surfaces, comprising
a carrier (11);
at least one cleaning roller (13) rotatably supported at the carrier (11); and
a rotary drive (15, 17) for the cleaning roller (13),
wherein the rotary drive (15, 17) is configured as a fluid drive in which the flow of a cleaning fluid supplied to the cleaning roller (13) for cleaning purposes is converted into a drive movement for the cleaning roller (13);
wherein the rotary drive (15, 17) is configured to hold the cleaning roller (13) at at least one end face and to supply the cleaning fluid to the interior of the cleaning roller (13) at the end face,
**characterized in that**
a downstream transmission arrangement is provided to whose outlet the cleaning brush (13) is coupled at the end face.

2. A cleaning apparatus in accordance with claim 1,
**characterized in that**
the rotary drive (15, 17) is configured in accordance with the principle of a fluid drive for a dish washing brush.

3. A cleaning apparatus in accordance with claim 1 or claim 2,
**characterized in that**
the rotary drive (15, 17) is a component of the carrier (11).

4. A cleaning apparatus in accordance with any one of the preceding claims,
**characterized in that**
the carrier (11) is configured as a fork with tines formed by the rotary drive (15, 17) for holding the cleaning roller (13), with the rotary drive preferably including two drive units (15, 17) which each form a tine.

5. A cleaning apparatus in accordance with any one of the preceding claims,
**characterized in that**
the rotary drive (15, 17) is effective simultaneously in the region of both end faces of the cleaning roller (13).

6. A cleaning apparatus in accordance with any one of the preceding claims,
**characterized in that**
the rotary drive includes two drive units (15, 17) provided with different rotational senses and otherwise formed with the same construction.

7. A cleaning apparatus in accordance with any one of the preceding claims,
**characterized in that**
the carrier (11) includes a holder (21) preferably extending substantially parallel to the axis of rotation (19) of the cleaning roller (13) for drive units (15, 17) of the rotary drive, said holder being configured as a common fluid supply for the drive units (15, 17).

8. A cleaning apparatus in accordance with any one of the preceding claims,
**characterized in that**
the rotary drive (15, 17), in particular each drive unit, includes a work space (23) to which the fluid is supplied and in which the fluid flow is converted into the drive movement, with the work space (23) communicating with the interior of the cleaning roller (13).

9. A cleaning apparatus in accordance with any one of the preceding claims,
**characterized in that**
the rotary drive (15, 17) is configured to hold the cleaning roller (13) at both end faces.

## Revendications

1. Dispositif de nettoyage pour le nettoyage de surfaces d'installations solaires ou d'installations photovoltaïques, comprenant un support (11),
au moins un cylindre de nettoyage (13) monté en rotation sur le support (11), et
un entraînement rotatif (15, 17) pour le cylindre de nettoyage (13), dans lequel l'entraînement rotatif (15, 17) est réalisé comme un entraînement à fluide dans lequel l'écoulement d'un fluide de nettoyage alimenté au cylindre de nettoyage (13) dans le but d'un nettoyage est converti en un mouvement d'entraînement pour le cylindre de nettoyage (13),
dans lequel l'entraînement rotatif (15, 17) est réalisé pour maintenir le cylindre de nettoyage (13) sur au moins un côté frontal, et pour alimenter le fluide de nettoyage sur le côté frontal vers l'intérieur du cylindre de nettoyage (13),
**caractérisé en ce que**
il est prévu un agencement de transmission disposé à la suite, à la sortie duquel le cylindre de nettoyage (13) est couplé sur le côté frontal.

2. Dispositif de nettoyage selon la revendication 1,
**caractérisé en ce que** l'entraînement rotatif (15, 17) est réalisé suivant le principe d'un entraînement à fluide pour une brosse de lavage pour assiettes.

3. Dispositif de nettoyage selon la revendication 1 ou 2,
**caractérisé en ce que** l'entraînement rotatif (15, 17) est une partie constitutive du support (11).

4. Dispositif de nettoyage selon l'une des revendications précédentes,
**caractérisé en ce que** le support (11) est réalisé sous forme de fourche avec des bras, formés par l'entraînement rotatif (15, 17), pour maintenir le cylindre de nettoyage (13), et de préférence l'entraînement rotatif inclut deux unités d'entraînement (15, 17) qui forment chacune un bras.

5. Dispositif de nettoyage selon l'une des revendications précédentes,
**caractérisé en ce que** l'entraînement rotatif (15, 17) est simultanément actif dans la région des deux côtés frontaux du cylindre de nettoyage (13).

6. Dispositif de nettoyage selon l'une des revendications précédentes,
**caractérisé en ce que** l'entraînement rotatif inclut deux unités d'entraînement (15, 17) présentant des sens de rotation différents et réalisées par ailleurs avec des structures identiques.

7. Dispositif de nettoyage selon l'une des revendications précédentes,
**caractérisé en ce que** le support (11) inclut une monture (21), s'étendant de préférence sensiblement parallèlement à l'axe de rotation (19) du cylindre de nettoyage (13), pour des unités d'entraînement (15, 17) de l'entraînement rotatif, ladite monture étant réalisée comme une alimentation de fluide commune pour les unités d'entraînement (15, 17).

8. Dispositif de nettoyage selon l'une des revendications précédentes,
**caractérisé en ce que** l'entraînement rotatif (15, 17), en particulier chaque unité d'entraînement, inclut une chambre de travail (23) à laquelle le fluide est amené et dans laquelle l'écoulement de fluide est converti pour donner le mouvement d'entraînement, et la chambre de travail (23) communique avec l'intérieur du cylindre de nettoyage (13).

9. Dispositif de nettoyage selon l'une des revendications précédentes,
**caractérisé en ce que** l'entraînement rotatif (15, 17) est réalisé pour maintenir le cylindre de nettoyage (13) sur les deux côtés frontaux.
